# EUROPEAN PATENT SPECIFICATION

(11) **EP 2 003 021 B1**
(45) Date of publication and mention of the grant of the patent: **29.01.2014**
(21) Application number: 07715110.8
(22) Date of filing: 01.03.2007
(51) Int. Cl.: B60R 21/00, B60R 1/00, B60R 11/02, H04N 7/18

(54) **PARKING ASSISTANCE DEVICE**
EINPARKHILFEVORRICHTUNG
DISPOSITIF D'AIDE AU STATIONNEMENT

(30) Priority: 31.03.2006 JP 2006099773
(43) Date of publication of application: 17.12.2008
(73) Proprietor: AISIN SEIKI KABUSHIKI KAISHA, Kariya-shi, Aichi-ken 448-8650 (JP)
(72) Inventor: YAMAUCHI, Hiroshi c/o TOYOTA JIDOSHA KABUSHIKI KAISHA, Aichi 4718571 (JP); WATANABE, Kazuya c/o AISIN SEIKI KABUSHIKI KAISHA, Kariya-shi, Aichi 4488650 (JP); SATO, Kosuke c/o AISIN SEIKI KABUSHIKI KAISHA, Kariya-shi, Aichi 4488650 (JP)
(74) Representative: TBK
(86) International application number: PCT/JP2007/053897
(87) International publication number: WO 2007/119301

(56) References cited:
- EP-A1- 1 327 559
- EP-A1- 1 465 135
- EP-A1- 2 060 465
- EP-A2- 1 270 367
- DE-A1-102006 061 597
- JP-A- 2001 277 969
- JP-A- 2003 104 055
- JP-A- 2004 148 901
- JP-A- 2004 306 814
- JP-A- 2005 075 013
- JP-A- 2005 178 464
- US-A1- 2002 041 239

## Description

The present invention relates to a parking assistance device, and particularly relates to a parking assistance device advantageous for guiding a vehicle to be parked and providing parking assistance to a driver of a vehicle.

### BACKGROUND ART

A parking assistance device is conventionally known wherein a photographic image that shows the peripheral state of a vehicle is displayed on a display disposed in the vehicle interior, whereby the vehicle driver can determine whether the vehicle can be parked in a parking space and determine the parking start position where parking is to begin (for an example, see Patent Document 1). With this parking assistance device, a camera disposed in the front portion of the vehicle is used for presenting an image of the state of at least the left or right direction from the front portion of the vehicle, and the photographic image is displayed on the display. The driver moves the vehicle to the parking start position while viewing the display showing the photographic image.
Patent Document 1: Japanese Laid-open Patent Application No. 2003-127813
Patent document JP 2004-306814 A discloses a parking assistance device for guiding a reverse travel of a vehicle toward a target parking position in which the parking is to occur, comprising: a parking target indicator display section having means for displaying a forward picture in which the forward state of the vehicle is presented as an image on a display that can be viewed by a vehicle driver prior to reverse travel guidance to the target parking position, and a forward travel guidance section having means for guiding forward travel of the vehicle to a parking start position, which is in a predetermined relative positional relationship with a target parking position and in which the reverse travel of the vehicle is to be started toward the target parking position.

### DISCLOSURE OF THE INVENTION

### Problems That the Invention Is Intended to Solve

With the parking assistance device according to Patent Document 1, the photographic image shown on the display, which can be viewed by the driver, is one in which the state in the left and right directions from the front portion of the vehicle is displayed. Therefore, in this parking assistance device, the orientation in the left right directions of the vehicle of the photographic image shown on the display does not match the orientation of the vehicle. Consequently, it is not easy for the driver to understand the content of the photographic image and the movement of the photographic image in accompaniment with the movement of the vehicle. For this reason, there is a possibility that it will be very difficult for a driver who is not skilled in operating a vehicle during a parking maneuver to move the vehicle to a suitable parking start position.

In view of the foregoing, an object of the present invention is to provide a parking assistance device that can readily guide a vehicle to a parking start position where parking is to begin.

### Means for Solving the Problems

The aforementioned object is achieved by means of the parking assistance device according to claim 1.

A parking assistance device designed to solve the above-mentioned problems is a parking assistance device for guiding a forward travel of a vehicle to a parking start position in which the vehicle is to be parked, comprising a display section for displaying on a display that can be viewed by a vehicle driver a forward picture in which the state of the forward direction of the vehicle is presented as an image, and may further display and superimpose on the forward image a target indicator for showing the parking start position or a guidance position that must be passed through in the process of arriving at the parking start position.

In accordance with this configuration, the forward image in which the forward state of the vehicle is presented as an image is displayed on a display that can be viewed by the vehicle driver, and a target indicator is displayed showing the parking start position or the guidance position that must be passed through in the process of arriving at the parking start position, being superimposed on the forward image. Therefore, since the movement of the picture image on the display is matched with the movement direction of the vehicle, the vehicle driver can readily guide the vehicle to the parking start position by moving the parking vehicle to the parking start position or to a guidance position immediately prior to the parking start position while viewing the target indicator and the forward state of the vehicle shown on the display.

According to another preferred aspect of the parking assistance device, the display section may display on the display a vehicle indicator for showing that the vehicle has moved to the parking start position or the guidance position when a positional relationship with the target indicator has reached a predetermined positional relationship on the display. Adopting such a configuration allows the vehicle to be readily guided to the parking start position because the vehicle driver can bring the vehicle to the parking start position or the guidance position by moving the parking vehicle so that the vehicle indicator reaches a predetermined positional relationship with the target indicator on the display.

The parking start position may be a position in which the reverse travel of a vehicle starts toward the target parking position where the vehicle is to be parked, or may be a position on a forward extended line with respect to the initial position of the vehicle and on a minimum turn trajectory of the vehicle that passes through the parking start position.

The parking assistance device according to the present invention is a parking assistance device for guiding a reverse travel of a vehicle toward a target parking position in which the parking is to occur, characterized in comprising a parking target indicator display section for displaying a forward picture in which the forward state of the vehicle is presented as an image on a display that can be viewed by a vehicle driver prior to reverse travel guidance to the target parking position, and superimposing and displaying on the forward image a parking target indicator for showing a target parking position.

Adopting such a configuration is effective for easily setting the target parking position in which a vehicle is to be parked. Furthermore, a forward picture is displayed in which the forward state of the vehicle is presented as an image on a display that can be viewed by a vehicle driver prior to reverse travel guidance to the target parking position, and a parking target indicator is superimposed and displayed on the forward image to show a target parking start position. In accordance with this configuration, since the movement of the picture image on the display is matched with the movement direction of the vehicle, the vehicle driver can easily set the target parking position by setting the target parking position in which the parking vehicle is to be parked while viewing the target indicator and the forward state of the vehicle shown on the display.

According to the invention, the parking assistance device is provided with a target parking position-setting section for setting the target parking position by specifying the position of the parking target indicator on the display.

According to the invention, the parking assistance device is provided with a forward travel guidance section for guiding a forward travel of the vehicle to the parking start position, which is in a predetermined relative positional relationship with the target parking position and in which the reverse travel of the vehicle is to be started toward the target parking position, after the target parking position has been set using the target parking position setting section. Adopting this configuration allows a vehicle to be easily guided to a target parking position where parking is to be started.

The parking assistance device may also be configured so that the forward travel guidance section has a target indicator display section for displaying the forward image on the display as well as superimposing and displaying on the forward image a target indicator for showing the parking start position or the guidance position through which passage will occur in the process of arriving at the parking start position; and so that the target indicator display section displays on the display a vehicle indicator for showing that the vehicle has moved to the parking start position or to the guidance position when the positional relationship with the target indicator on the display corresponds to a predetermined positional relationship.

In accordance with the present invention, a vehicle can be easily guided to a parking start position where parking is to be started.

### BRIEF DESCRIPTION OF THE DRAWINGS

FIG. 1 is a view showing the system configuration of a vehicle-mounted parking assistance device as an embodiment of the present invention;
FIG. 2 is a top view showing an example of the movement of a vehicle in the present embodiment;
FIG. 3 is a flowchart of an example of a control routine executed in the parking assistance device of the present embodiment;
FIG. 4 is a view showing the picture image displayed on the display when the target parking position in which the vehicle is to be parked is to be set in the present embodiment;
FIG. 5 is a view showing the picture image displayed on the display in a process in which the vehicle is moved to a parking start position after the target parking position has been set in the present embodiment;
FIG. 6 is a view showing the picture image displayed on the display in a process in which the vehicle is moved to a parking start position after the target parking position has been set in the present embodiment;
FIG. 7 is a view showing the picture image displayed on the display in a process in which the vehicle is moved to a target parking position after having arrived at parking start position in the present embodiment;
FIG. 8 is a view showing the picture image displayed on the display in a process in which the vehicle is moved to a parking start position after the target parking position has been set in a modified example of the present embodiment; and
FIG. 9 is a view showing the picture image displayed on the display in a process in which the vehicle is moved to a parking start position after the target parking position has been set in a modified example of the present embodiment.

### [KEY]

10: Parking assistance device
12: Parking assistance ECU
14: Front camera
18: Touch display
S: Parking frame setting position
A: Desired parking space (target parking position)
B: Parking start position
C: Guidance position
X: Parking frame
Y1, Y2: Target line
Z1, Z2: Guidance frame
M1, M2: Distance approximation line

### BEST MODE FOR CARRYING OUT THE INVENTION

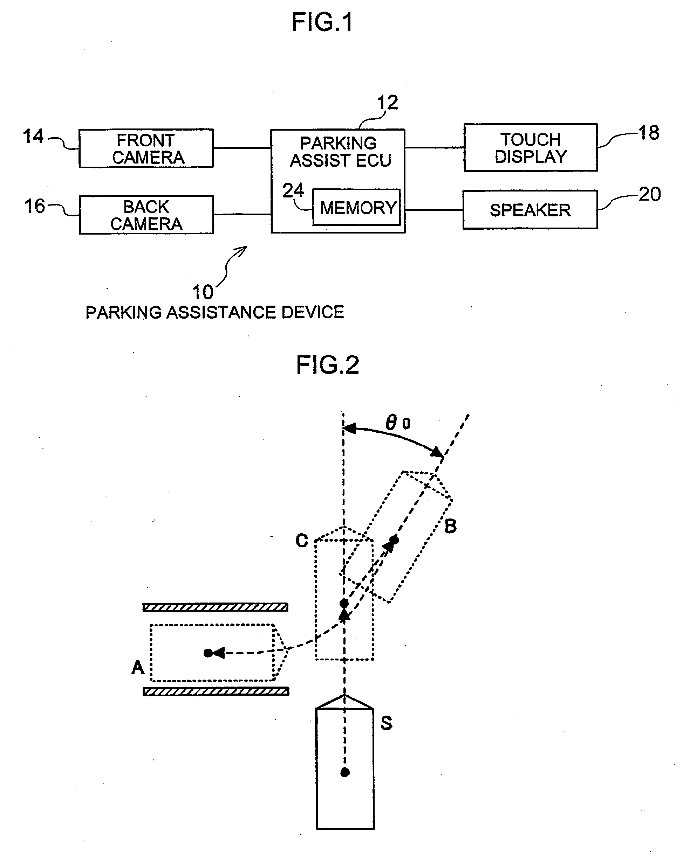

Embodiments of the present invention will be described below with reference to the accompanying drawings. FIG. 1 is a system configuration diagram showing a vehicle-mounted parking assistance device 10 as an embodiment of the present invention. The parking assistance device 10 of the present embodiment is a device for guiding a vehicle to a target parking position in which a vehicle is to be parked or to a parking start position in which parking is to be started, in order to provide parking assistance to the driver of the vehicle when the vehicle is to be parked side-by-side in a parking garage, parallel parked at the side of a road or the like, or at other times of parking the vehicle. The parking assistance device 10 is provided with a parking assist electronic control unit (hereinafter referred to as parking assist ECU) 12 primarily composed of a computer, as shown in FIG. 1.

A front camera 14 and a back camera 16 are connected to the parking assist ECU 12. The front camera 14 is disposed in the center of the bumper, the grill, or another front portion of the vehicle body, and presents an image of the front area of the vehicle at a predetermined angle range that is set in advance forward of the vehicle, which includes both the right- and leftward directions from the disposed position. The back camera 16 is disposed above the license plate or in another rear area of the vehicle body, and captures images of the rear area of the vehicle at a predetermined angle range that is set in advance rearward of the vehicle from the disposed position. The picture image of the forward state of the vehicle captured by the front camera 14 and the picture image of the state rearward of the vehicle captured by the back camera 16 are fed to the parking assist ECU 12.

A touch display 18 is connected to the parking assist ECU 12. The touch display 18 is disposed so that the display screen faces the rear direction of the vehicle in a position (e.g., in the center of the instrument panel) that allows the vehicle driver to view and operate the display. The parking assist ECU 12 displays on the display screen of the touch display 18 a picture image in which the peripheral state of the vehicle is captured by the front camera 14 and the back camera 16 when the vehicle driver has performed a predetermined switch operation or when it has been detected using the navigation device or the like that the parking vehicle has entered a parking area. The touch display 18 displays on the display screen the picture image in which the peripheral state of the vehicle has been captured by the front camera 14 and the back camera 16 in accordance with a command from the parking assist ECU 12.

A pressure sensitive or other type of touch operation section (not shown) that can by operated by the vehicle driver is provided to the touch display 18. The touch operation section is composed of a hierarchical plurality of switches and is displayed on the display screen in accordance with a command from the parking assist ECU 12. The parking assist ECU 12 detects an operation on the touch operation section performed by the vehicle driver, and executes routines that correspond to the content of the detected operation. The touch operation section includes switches for selecting a side-by-side parking mode or a parallel parking mode, arrow button switches for setting the target parking position where the driver will park the vehicle, switches for confirming the settings, as well as other switches.

A speaker 20 for outputting audio to the passengers is connected to the parking assist ECU 12. The parking assist ECU 12 issues commands to the speaker 20 so that appropriate audio is outputted from the speaker 20 at suitable timing when parking assistance control is executed. The speaker 20 outputs appropriate audio in accordance with a command from the parking assist ECU 12.

The parking assist ECU 12 houses a memory 24 that is capable of reading and writing data. The memory 24 stores positional information related to the road of a target parking position that is set when the driver confirms the position, pathway information of the guidance pathway to the target parking position generated by calculation, as well as other information. The information stored the memory 24 is erased when the shift position has moved from the reverse position to the parking position or to the neutral position after parking assistance control has started, when the vehicle has approached the target parking position, or at other times when parking assistance control is ended.

The specific operation of the parking assistance device 10 of the present embodiment is described below with reference to FIGS. 2 to 7. Side-by-side parking will mainly be described because there are no particular differences other than the specific calculation details between side-by-side parking when parking in a garage and parallel parking at the side of a road or the like in terms of executing parking assistance for the driver.

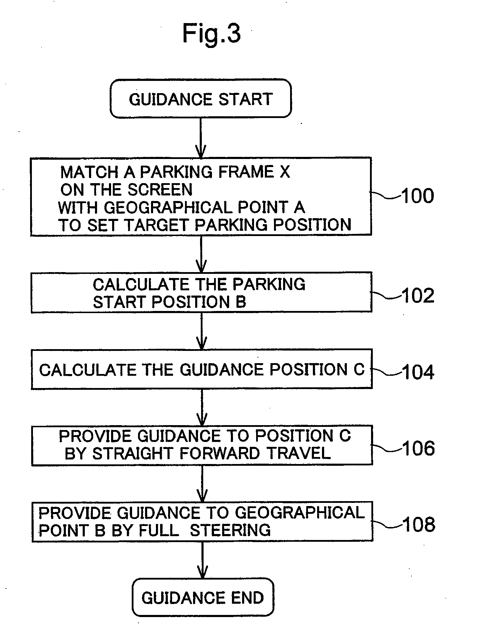

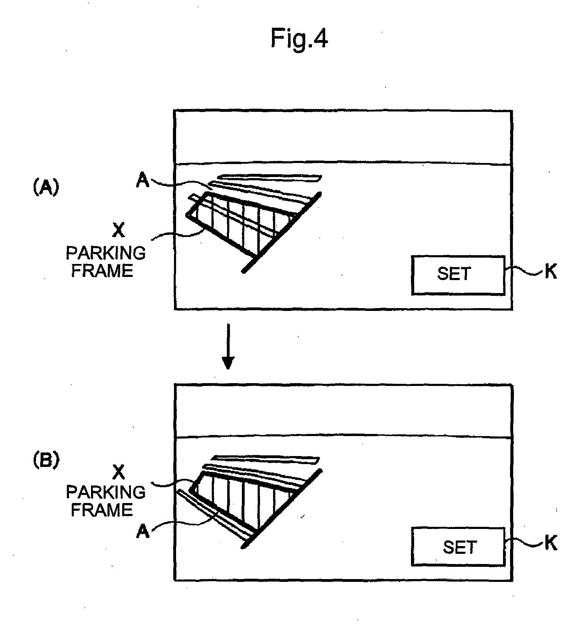

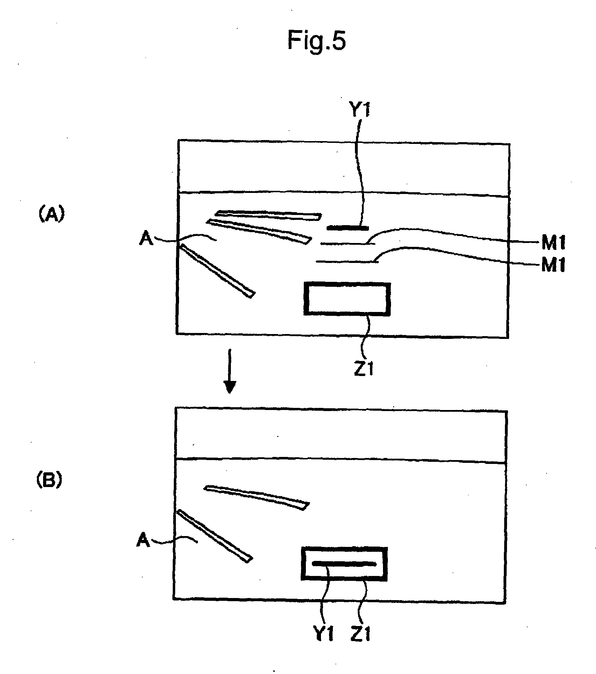

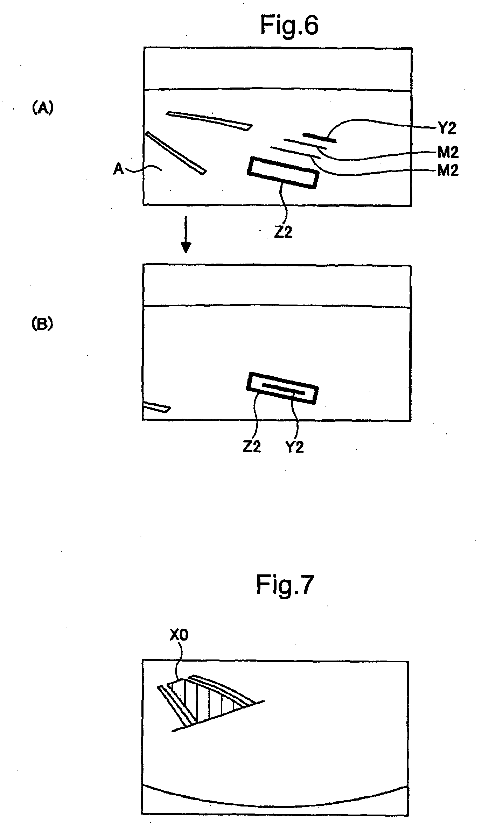

FIG. 2 is a top view showing an example of the movement of a vehicle in the present embodiment. FIG. 3 is a flowchart of an example of a control routine executed in the parking assistance device of the present embodiment. FIG. 4 is a view showing the display screen of the touch display 18 when the target parking position is set. FIGS. 5 and 6 are views showing the display screen of the touch display 18 when the vehicle is moved to the parking start position after the target parking position has been set in the present embodiment. FIG. 7 is a view showing the picture image displayed on the display screen of the touch display 18 in a process in which the vehicle is moved to a target parking position after having arrived at parking start position in the present embodiment.

In the present embodiment, the parking assist ECU 12 displays on the display screen of the touch display 18 the forward image in which the forward state of the vehicle is captured by the front camera 14 when, e.g., a predetermined switch for requesting parking assistance has been operated by the vehicle driver, or when it has been detected using the navigation device or the like that the parking vehicle has entered a parking area. Also, a switch for selecting the side-by-side parking mode or the parallel parking mode is superimposed and displayed on the forward image.

When the side-by-side parking mode is selected in this state, the parking assist ECU 12 displays on the display screen of the touch display 18 a setting switch K for confirming the setting of the target parking position, and displays a mark indicator (the shaded area in FIG. 4; hereinafter referred to as parking frame X), which is superimposed on the forward image in which the forward state of the vehicle is presented as an image, and represents on the display screen the target parking position in which the vehicle is to be parked side-by-side on a road surface. When the display is started, audio guidance for instructing vehicle movement so that the parking frame X and the desired parking space A in the forward direction of the vehicle match on the display screen of the touch display 18 is provided to the vehicle driver with the aid of the speaker 20. It is furthermore possible to display on the display screen of the touch display 18 the parking frame X that corresponds to only one space selected by the driver as to whether to park in a left forward space or to park in a right forward space.

The parking frame X described above corresponds to the target parking position on an actual road surface, and has a shape with a size that substantially matches the dimensions of the body of the vehicle when projected onto the surface of an actual road, or a shape with a size that is slightly wider than the dimensions of the vehicle body, but in terms of the display screen of the touch display 18, the parking frame is formed to a shape that corresponds to the position in the forward image (camera coordinates) shown on the display screen. The parking frame X shows an unchanging position as the target parking position on the display screen in a relative positional relationship (e.g., a position in which the front center of the vehicle body is moved 1 meter ahead and 2 meters to the left or right, and in which the plane area of the vehicle body is rotated 90°) determined in advance with respect to the position of the parking vehicle on the surface of the road, and is fixed and kept in a predetermined position on the display screen even when the parking vehicle moves.

When the parking vehicle is to be parked side-by-side, the vehicle driver first positions the parking vehicle in a neutral steering state so as to have an angle of 90° with respect to the parking space in front of the parking space (i.e., a position in which the driver can directly make visual confirmation (forward view) of the parking space through the front windshield) in which side-by-side parking is desired. When the parking frame X on the display screen of the touch display 18 does not match the desired parking space A in the forward direction of the vehicle shown on the screen, as shown in FIG. 4(A), the parking vehicle is moved while viewing the display screen of the touch display 18 so that the parking frame X matches the desired parking space A, the parking frame X on the display screen is made to match the desired parking space A and the parking vehicle is stopped (from FIG. 4(A) to FIG. 4(B)).

The vehicle driver touches the setting switch K displayed on the display screen so as to confirm the setting of the target parking position in the parking space A when it has been confirmed that the parking frame X on the display screen of the touch display 18 matches the desired parking space A. In this case, the parking assist ECU 12 sets the target parking position in which the parking vehicle is to side-by-side parked in the desired parking space A, and stores (step 100) the positional information (represented by the relative position based on the position of the parking vehicle at the point in time when the information is set) in the memory 24. Hereinbelow, the vehicle position will be referred to as the parking frame setting position S when the vehicle driver touches the setting switch K, i.e., when the parking frame X on the display screen of the touch display 18 matches the desired parking space A. The target parking position A set in the manner described above is in a predetermined relative positional relationship with respect to the parking frame setting position S.

The parking assist ECU 12 calculates (step 102) the position (hereinafter referred to as parking start position B) on the actual road surface where the reverse travel of the vehicle is to be started toward the target parking position A when the target parking position A is set in the manner described above. The parking start position B is a position in a predetermined relative positional relationship with the target parking position A thus set. Specifically, this is a position on a travel trajectory that passes through the target parking position A and in which the straight reverse travel interval that corresponds the model of the parking vehicle, the clothoid interval, and the maximum allowable steering interval (minimum turning trajectory interval) are connected in sequence from the position A, and is a position in which the orientation of the parking vehicle will form a predetermined angle θ 0 (e.g., 30°, which satisfies the expression 0 < θ0 < 90°) relative to the orientation in the current position (parking frame setting position S).

The parking assist ECU 12 calculates (step 104) the position (hereinafter referred to as guidance position C) on the actual road surface through which passage must occur in the process of arriving at the parking start position B from the parking frame setting position S, which is the current position of the parking vehicle, when the parking start position B is set in the manner described above. The guidance position C is a position in a predetermined relative positional relationship with the parking start position B, is specifically a position on the travel trajectory (minimum turn trajectory) that passes through the parking start position B during steering in the maximum allowable steering angle that corresponds to the model of the parking vehicle, and is a position (on the forward extension line of the vehicle with respect to the parking frame setting position S) makes the orientation of the parking vehicle to be the same as the orientation in the current position (parking frame setting position S).

When the position of the guidance position C and the parking start position B in relation to the target parking position A are calculated in the manner described above, the parking assist ECU 12 first displays on the display screen of the touch display 18 a mark indicator (the bold line shown by the horizontal bar in FIG. 5; hereinafter referred to as target line Y1), which is superimposed on the forward image in which the forward state of the vehicle is captured by the front camera 14, and represents on the display screen the guidance position C through which passage the vehicle will occur in the process of arriving at the parking start position B on the surface of the road. Also, a mark indicator (the bold frame shown by a rectangle in a horizontal state in FIG. 5; hereinafter referred to as guidance frame Z1) is displayed showing that the parking vehicle has moved to the guidance position C when the positional relationship with the target line Y1 described above is in a predetermined positional relationship on the display screen of the touch display 18. In this case, the mark indicator (the thin line shown using a horizontal bar at the distance point in FIG. 5) showing the distance from the parking vehicle position (initially the parking frame setting position S) to the guidance position C is also displayed (step 106).

The parking assist ECU 12 issues a command to the speaker 20 to provide to the vehicle driver audio guidance that provides instruction to move the vehicle in a straight line forward so that the target line Y1 is included in the guidance frame Z1 on the display screen of the touch display 18 when the display described above is started. In this case, audio guidance that provides instruction to move the vehicle in a straight line forward until the target line Y1 is included in the guidance frame Z1 is emitted from the speaker 20 to the vehicle driver.

The target line Y1 described above corresponds to the guidance position C on the actual road surface, and the line moves on the display screen in accompaniment with the movement of the parking vehicle. The guidance frame Z1 shows on the display screen an unchangeable position (e.g., the position when the parking vehicle has traveled forward 50 cm in a state of neutral steering) in a predetermined relative positional relationship with respect to the position of the parking vehicle on the actual road surface, and is fixed and kept in a predetermined position on the display screen even when the parking vehicle moves. The target line Y1 and the guidance frame Z1 are mark indicators on the display screen that have been set so that the parking vehicle is positioned in the guidance position C described above when the target line Y1 is within the frame of the guidance frame Z1.

The distance approximation line M1 shows on the display screen the position immediately prior to the predetermined distance (e.g., 1 or 2 m) in relation to the position on the actual road surface shown by the target line Y1, and the line moves on the display screen in accompaniment with the movement of the parking vehicle. The distance approximation line M1 can be removed when its position on the actual road surface is no longer accommodated in the area of the picture image of the front camera 14 in accompaniment with the forward movement of the parking vehicle. Also, there may be a plurality of distance approximation lines, as shown in FIG. 5(A), so that different distances are shown on the display screen of the touch display 18.

The parking assist ECU 12 thereafter measures the position of the parking vehicle in relation to the guidance position C using a wheel speed sensor or the like when the target line Y1, the guidance frame Z1, and the distance approximation line M1 are superimposed and displayed on the picture image shown on the display screen of the touch display 18, and the target line Y1 and the distance approximation line M1 are moved on the display screen in accordance with the position of the parking vehicle (step 106).

The vehicle driver touches the setting switch K on the display screen of the touch display 18, after which the vehicle driver causes the parking vehicle to travel forward toward the guidance position C from the parking frame setting position S, with parking vehicle in a neutral steering state, while viewing the display screen of the touch display 18 in the case that the target line Y1, the guidance frame Z1, and the distance approximation line M1 are superimposed and displayed on the picture image shown on the display screen. The target line Y1 on the display screen is then brought into the guidance frame Z1, and the parking vehicle is stopped (from FIG. 5(A) to FIG. 5(B)). In this case, the parking vehicle arrives at the guidance position C on the actual road surface through which passage occurs in the process of arriving at the parking start position B from the parking frame setting position S.

The parking assist ECU 12 subsequently superimposes and displays a mark indicator (a diagonal bold line in FIG. 6; hereinafter referred to as target line Y2) on the forward image, and shows on the display screen the parking start position B on the road surface in a state in which the forward image in which the forward state of the vehicle is captured by the front camera 14 is displayed on the display screen of the touch display 18 in the case that the parking assist ECU 12 has determined, as a result of measuring the parking vehicle position in relation to the guidance position C, that the parking vehicle has arrived at the guidance position C or has approached a predetermined distance, or detects that a predetermined switch has been touched by the vehicle driver who has confirmed that the target line Y1 is within the guidance frame Z1 on the display screen of the touch display 18. Also, a mark indicator (a bold rectangle in a state slightly diagonal from a horizontal state in FIG. 6; hereinafter referred to as guidance frame Z2) showing that the parking vehicle has moved to the parking start position B is displayed (step 108) when the positional relationship with the target line Y2 on the display screen of the touch display 18 has reached a predetermined position relationship. In the process, a mark indicator (a thin line shown using a diagonally horizontal bar at the distance point of the mark indicator in FIG. 6; hereinafter referred to as distance approximation line M2) for showing the distance from the parking vehicle position (initially guidance position C) to the parking start position B is also displayed (step 108).

The parking assist ECU 12 issues a command to the speaker 20 to provide audio guidance to the vehicle driver to instruct that the vehicle is to be turned and made to travel forward at the maximum allowable steering angle so that the target line Y2 is included within the guidance frame Z2 on the display screen of the touch display 18 when the display described above is started. In this case, audio guidance for instructing the vehicle driver from the speaker 20 to turn and make forward travel at the maximum allowable steering angle of the vehicle is issued until the target line Y2 is included in the guidance frame Z2.

The target line Y2 described above corresponds to the parking start position B on the actual road surface, and the line moves on the display screen in accompaniment with the movement of the vehicle. The guidance frame Z2 displays on the display screen an unchanging position (e.g., a position in which the parking vehicle has traveled forward 50 cm in a state of steering at the maximum steering angle) in a predetermined relative positional relationship with respect to the position of the parking vehicle on the actual road surface, and is fixed and kept in a predetermined position on the display screen even when the parking vehicle moves. The target line Y2 and the guidance frame Z2 are mark indicators on the display screen that have been set so that the parking vehicle is positioned in the parking start position B described above when the target line Y2 is within the frame of the guidance frame Z2.

The distance approximation line M2 shows on the display screen the position immediately prior to the predetermined distance (e.g., 1 or 2 m) in relation to the position on the actual road surface shown by the target line Y2, and the line moves on the display screen in accompaniment with the movement of the parking vehicle. The distance approximation line M2 can be removed when its position on the actual road surface is no longer accommodated in the area of the picture image of the front camera 14 in accompaniment with the forward movement of the parking vehicle. Also, there may be a plurality of distance approximation lines as shown in FIG. 6(A) so that different distances are shown on the display screen of the touch display 18.

The parking assist ECU 12 thereafter measures the position of the parking vehicle in relation to the parking start position B using a wheel speed sensor, a steering angle sensor, or the like when the target line Y2, the guidance frame Z2, and the distance approximation line M2 are superimposed and displayed on the picture image shown on the display screen of the touch display 18, and the target line Y2 and the distance approximation line M2 are moved (step 108) on the display screen in accordance with the position of the parking vehicle.

The vehicle driver moves the parking vehicle to the guidance position C, and then causes the parking vehicle to travel forward toward the parking start position B diagonally forward from the guidance position C, with parking vehicle in a state of maximum allowable steering angle, while viewing the display screen of the touch display 18 in the case that the target line Y2, the guidance frame Z2, and the distance approximation line M2 are superimposed and displayed on the picture image shown on the display screen. The target line Y2 on the display screen is then brought into the guidance frame Z2, and the parking vehicle is stopped (from FIG. 6(A) to FIG. 6(B)). In this case, the parking vehicle arrives at the parking start position B on the actual road surface where the reverse travel of the parking vehicle is to be started toward the target parking position A. The vehicle driver moves the shift position to the reverse position when the driver has confirmed that the target line Y2 is included in the guidance frame Z2 on the display screen of the touch display 18.

In the present embodiment, the parking assist ECU 12 displays on the display screen of the touch display 18 a rearward image in which the rearward state of the vehicle that has been captured by the back camera 16, instead of a forward image in which the forward state of the vehicle has captured by the front camera 14, when it has been detected that, e.g., the parking vehicle has arrived at the parking start position B as a result of having measured the position of the parking vehicle in relation to the parking start position B, or that the shift position has moved from the reverse position to the parking position when the vehicle has approached up to a predetermined distance. It is preferred that the rearward image of the vehicle displayed on the display screen of the touch display 18 be one in which the picture image captured by the back camera 16 is left/right inverted.

In a state in which the rearward image of the vehicle is displayed on the display screen of the touch display 18, the position on the display screen that shows the rearward image of the vehicle captured by the back camera 16 in the target parking position A is calculated based on the specifications of the back camera 16 and the relative position between the target parking position A and the position of the parking vehicle (initially the parking start position B) that has been set in the manner described above. The mark indicator (the shaded area in FIG. 7; hereinafter referred to as defined parking frame X0) shown on display screen in relation to the target parking position A on the road surface is superimposed and displayed on the rearward image.

The parking assist ECU 12 issues a command to the speaker 20 to provide to the vehicle driver audio guidance that provides instruction to turn and cause the vehicle to travel in reverse at the maximum allowable steering angle in order to park the vehicle in the target parking position A when the display described above is started. In this case, audio guidance is first emitted from the speaker 20 to the vehicle driver so as to provide instruction to turn and move the vehicle in reverse at the maximum allowable steering angle of the vehicle in order to park the vehicle to the target parking position A. The defined parking frame X0 described above corresponds to the target parking position A that is set on the actual road surface, and the frame moves on the display screen in accompaniment with the movement of the parking vehicle.

The parking assist ECU 12 measures the position of the parking vehicle in relation to the target parking position A using a wheel speed sensor, a steering angle sensor, or the like when the defined parking frame X0 is superimposed and displayed on the vehicle rearward image shown on the display screen of the touch display 18; and the defined parking frame X0 is moved on the display screen in accordance with the position of the parking vehicle. The vehicle driver moves the shift position to reverse in the vicinity of the parking start position B, and thereafter disengages the brake and causes the parking vehicle to travel in reverse in a state in which the vehicle is steered at the maximum allowable steering angle to the side opposite from the side steered to during turning and forward travel from the guidance position C to the parking start position B. The parking vehicle is parked in a state of neutral steering in the target parking position A. The parking assist ECU 12 may provide audio guidance using the speaker 20 in relation to the required steering state in accordance with the position of the parking vehicle in order to assist in the steering operation of the vehicle driver in the process of backing the vehicle.

In the parking assistance device 10 of the present embodiment, the forward image of the forward state of the vehicle captured by the front camera 14 disposed in the front section of the vehicle body is displayed on the display screen of the touch display 18 inside the vehicle, and the parking frame X that shows the target parking position on the display screen can be superimposed and displayed on the forward image, when the target parking position is set prior to providing vehicle guidance toward the target parking position where the vehicle is to be parked. The driver performs an operation (specifically, a driving operation for moving the parking vehicle in the forward direction) to provide relative movement to the relationship between the parking frame X on the display screen and the desired parking space, and touches the setting switch K to be able to set the target parking position on the actual road surface.

In such a configuration, the picture image on the display screen of the touch display 18 does not move, for example, only to the left or only to the right when the vehicle travels forward, and the movement of the picture image on the display screen matches the movement direction of the vehicle. Also, the vehicle driver can perform an operation (specifically, a forward travel operation) while viewing the forward image of the vehicle shown on the display screen of the touch display 18 to be able to set the target parking position. Therefore, in accordance with the present embodiment, the target parking position of the desired parking space can be easily set because the vehicle driver can set the target parking position while viewing the vehicle forward image.

In the parking assistance device 10 of the present embodiment, when the target parking position based on the specified position of the parking frame X in the vehicle forward image is set in the manner described above, a position in a predetermined relative positional relationship is calculated for the target parking position A, and the resulting position is set as the parking start position B in which the reverse travel of the vehicle is to be started toward the target parking position. The forward image in which the forward state of the vehicle is captured by the front camera 14 disposed in the front section of the vehicle body is displayed on the display screen of the touch display 18. It is possible to superimpose and display on the forward image the guidance frame Z2, which shows that the vehicle has moved to the parking start position B when a predetermined positional relationship exists between the target line Y2 showing the parking start position B and the target line Y2 on the display screen (specifically, when the target line Y2 is included), as well as the guidance frame Z1, which shows that the vehicle has moved to the guidance position C when a predetermined positional relationship exists between the target line Y1 showing the guidance position C through which the vehicle will pass in the process of arriving at the parking start position B and the target line Y1 on the display screen (specifically, when the target line Y1 is included).

In such a configuration, the vehicle driver can perform a driving operation (forward travel and turning operations) for moving the vehicle while viewing the forward state of the vehicle shown on the display screen of the touch display 18 and the target lines Y1, Y2, which show the guidance position C and parking start position B in the image, in the process of moving the parking vehicle toward the parking start position B. The parking vehicle can be made to arrive at the guidance position C and the parking start position B by moving the parking vehicle so that the target lines Y1, Y2 are included within the guidance frames Z1, Z2 on the display screen. In this case as well, the picture image on the display screen of the touch display 18 does not move, for example, only to the left or only to the right when the vehicle travels forward, and the movement of the picture image on the display screen matches the movement direction of the vehicle. Therefore, in accordance with the present embodiment, guidance of the forward travel of the vehicle from the parking frame setting position S to the parking start position B carried out by the driving operation of the vehicle driver can be facilitated when the vehicle is to be parked. For this reason, even a driver who is not skilled in driving when parking a vehicle can move a vehicle forward to an appropriate parking start position B.

In the parking assistance device 10, the target lines Y1, Y2 and the guidance frames Z1, Z2 are superimposed and displayed on the forward image shown on the display screen of the touch display 18. In the process, it is possible to show the distance approximation lines M1, M2 that show the distances from the position of the parking vehicle to the guidance position C and the parking start position B. In such a configuration, the vehicle driver more easily ascertains the relative positional relationship between the parking vehicle and the guidance position C and parking start position B by viewing the forward state of the vehicle, the target lines Y1, Y2, and the distance approximation lines M1, M2, which are shown on the display screen of the touch display 18, in the process of driving and moving the parking vehicle to the guidance position C or the parking start position B. Accordingly, positional changes of the parking vehicle and the guidance position C and parking start position B that accompany the operation of the vehicle can be foreseen, and the stop timing of the vehicle in the guidance position C and the parking start position B can be more easily determined. Therefore, at this point as well, forward travel guidance of the vehicle to the parking start position B in a driving operation performed by the driver can be facilitated.

In the parking assistance device 10 of the present embodiment, it is possible to issue the following audio guidance to the vehicle driver from the speaker 20 at appropriate timing in the process of guiding forward travel from the parking frame setting position S to the parking start position B: audio guidance for instructing that the vehicle be moved so that the parking frame X on the display screen of the touch display 18 matches a desired parking space A ahead of the vehicle, audio guidance for instructing that the vehicle be made to travel straight forward so that the target line Y1 showing the guidance position C is included in the guidance frame Z1, audio guidance for instructing that the vehicle be turned and moved forward at the maximum allowable steering angle so that the target line Y2 is included within the guidance frame Z2, and audio guidance for instructing that the vehicle be turned and made to travel in reverse at the maximum allowable steering angle in order to park the vehicle in the target parking position A. Therefore, in accordance with the present embodiment, reverse travel guidance of the vehicle from the parking frame setting position S to the parking start position B as well as reverse travel guidance of the vehicle from the parking start position B to the target parking position A carried out by the driving operation of the vehicle can be facilitated. Accordingly, even a driver who is not skilled in driving when parking a vehicle can move a vehicle forward to an appropriate parking start position B, and the vehicle can be moved in reverse travel to the target parking position A.

In the parking assistance device 10 of the present embodiment, the parking start position B in which parking is to be started toward the target parking position A is a position in a predetermined relative positional relationship with the target parking position A. Specifically, this is a position on a travel trajectory that passes through the target parking position A and in which the straight reverse travel interval that corresponds to the model of the parking vehicle, the clothoid interval, and the maximum allowable steering interval (minimum turning trajectory interval) are connected in sequence from the position A, and is a position in which the orientation of the parking vehicle will form a predetermined angle θ 0 (e.g., 30°) relative to the orientation in the parking frame setting position S. Therefore, in accordance with the present embodiment, forward travel guidance toward an optimal parking start position B is made possible after having guided the reverse travel of the parking vehicle to the target parking position A when the vehicle is to be parked.

In the parking assistance device 10 of the present embodiment, when the vehicle arrives at the parking start position B, the rearward image in which the rearward state of the vehicle has been captured by the back camera 16 disposed in the rear section of the vehicle body is thereafter displayed on the display screen of the touch display 18. The defined parking frame X0, which shows the target parking position A on the display screen, can be superimposed and displayed on the rearward image, and audio guidance for instructing that the vehicle be turned and moved in reverse at the maximum allowable steering angle of the vehicle can be issued from the speaker 20 in order to park the vehicle in the target parking position A. Therefore, in accordance with the present embodiment, rearward travel guidance of the vehicle from the parking start position B to the target parking position A is made possible when the vehicle is to be parked.

In the embodiment described above, the display screen of the touch display 18 corresponds to the "display" cited in claims, the target lines Y1, Y2 correspond to the "target indicator" cited in the claims, the guidance frames Z1, Z2 correspond to the "vehicle indicator" cited in the claims, the parking frame setting position S corresponds to the "initial position" cited in the claims, and the parking frame X corresponds to the "parking target indicator" cited in the claims.

In the embodiment described above, the parking assist ECU 12 superimposes and displays the target lines Y1, Y2 on the forward image captured by the front camera 14 and displayed on the display screen of the touch display 18, showing on the display screen the parking start position B and guidance position C on the actual road surface, whereby the "display section" and the "target indicator display section" cited in the claims are implemented. The parking assist ECU 12 superimposes and displays the parking frame X, which shows the target parking position on the actual road surface, on the forward image captured by the front camera 14 and displayed on the display screen of the touch display 18, whereby the "parking target indicator display section" cited in the claims is implemented; and also executes the processing of step 100 in the routines shown in FIG. 3, whereby the "target parking position setting section" cited in the claims is implemented. The parking assist ECU 12 superimposes and displays the target lines Y1, Y2, which show the parking start position B and guidance position C on the actual road surface on the display screen, on the forward image captured by the front camera 14 and displayed on the display screen of the touch display 18, and also issues a command to the speaker 20 to provide the vehicle driver with audio guidance for instructing that the vehicle be made to travel straight forward so that the target line Y1 is included in the guidance frame Z1 on the display screen of the touch display 18, or that the vehicle be turned and made to travel forward at the maximum allowable steering angle so that the target line Y2 is included in the guidance frame Z2, whereby the "forward travel guidance section" cited in the claims is implemented.

In the embodiment described above, mark indicators (specifically, the guidance frames Z1, Z2), which show that the parking vehicle has moved to the guidance position C or parking start position B when the positional relationship with the target lines Y1, Y2 on the display screen corresponds to a predetermined positional relationship, is superimposed and displayed on the forward image in the display screen of the touch display 18, but it is also possible to include a portion of the vehicle body in the captured area by including the portion of the vehicle body in the area to be captured by the front camera 14.

In the embodiment described above, the mark indicators for showing the guidance position C and parking start position B that are superimposed and displayed on the forward image in the display screen of the touch display 18 when forward travel guidance from parking frame setting position S to parking start position B is provided are represented as linear target lines Y1, Y2; and the mark indicators for showing that the parking vehicle has moved to the guidance position C or the parking start position B when the positional relationship with the target lines Y1, Y2 superposed and displayed on the forward image on the display screen corresponds to a predetermined positional relationship are represented as rectangular frame-shaped guidance frames Z1, Z2, but the present invention is not limited to such a configuration. For example, the approximation indicators showing the guidance position C and the parking start position B may be rectangular shapes, or conversely, it is also possible to use linear approximation indicators showing that the parking vehicle has moved to the guidance position C or parking start position B when the positional relationship with the target lines Y1, Y2 on the display screen corresponds to a predetermined positional relationship. In this case, it can be determined that the vehicle has moved to the guidance position C or parking start position B when the guidance frames Z1, Z2 and the target frames showing the guidance position C and parking start position B match and superimpose each other on the display screen of the touch display 18, or when guidance lines and the target lines Y1, Y2 that show the guidance position C and parking start position B match and superimpose each other.

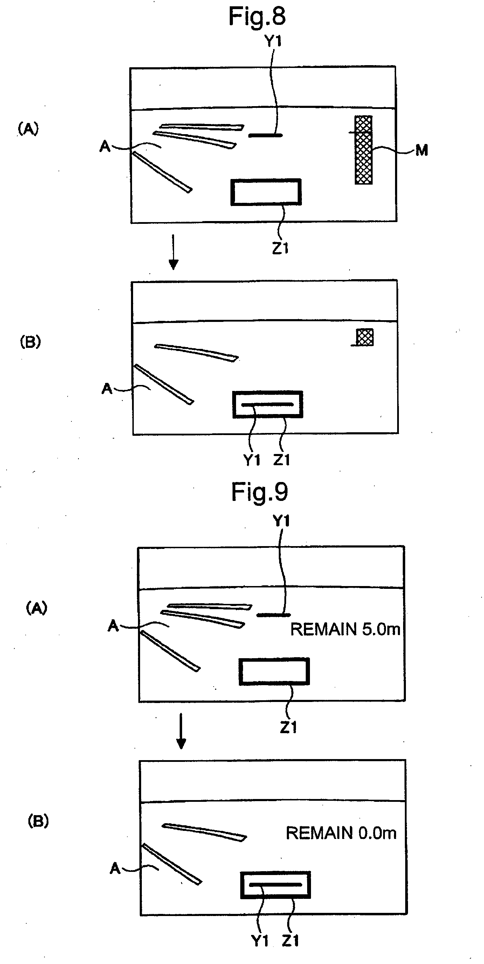

In the embodiment described above, the target lines Y1, Y2, the guidance frames Z1, Z2, and the distance approximation lines M1, M2 that show the distance from the parking vehicle to the guidance position C and parking start position B as lines to the distance points are superimposed and displayed on the forward image shown on the display screen of the touch display 18. However, the approximation indicators for showing the distance from the parking vehicle to the guidance position C and the parking start position B are not limited to this configuration. For example, the configuration may be configuration M in which the distance between the position of parking vehicle and the guidance position C or the parking start position B is expressed by the length of a bar graph (perpendicular direction), as shown in FIG. 8, or may be one in which the distance is expressed by specific digital numbers, as shown in FIG. 9.

In the embodiment described above, the parking frame X shown on the display screen of the touch display 18 for matching the target parking position to a desired parking space A prior to confirming the setting of the target parking position is fixed and kept in a predetermined position on the display screen even when the parking vehicle moves, and the position on the actual road surface shown by the parking frame X is in a predetermined relative positional relationship with the position of the parking vehicle, but the present invention is not limited to this configuration. For example, the position on the actual road surface shown by the parking frame X may be moved arbitrarily in the forward and rearward directions or in left and right directions with respect to the position of the parking vehicle. In this case, an arrow switch may be displayed for moving the parking frame X on the display screen of the touch display 18.

In the embodiment described above, audio guidance using the speaker 20 to indicate the steering state is performed as rearward travel guidance of the vehicle for assisting in the driving operation of the vehicle driver from the parking start position B to the target parking position A in a parking mode, but the vehicle may be automatically steered along a pathway from the parking start position B to the target parking position A using a power steering device without the driver participating in the steering, and an assistance line may be displayed on the display screen of the touch display 18. Also, the vehicle may be stopped automatically without reliance on braking by the driver.

## Claims

1. A parking assistance device (10) for guiding a reverse travel of a vehicle toward a target parking position in which the parking is to occur, **characterized in** comprising:
a parking target indicator display section having means for displaying a forward picture in which the forward state of the vehicle is presented as an image on a display (18) that can be viewed by a vehicle driver prior to reverse travel guidance to the target parking position, and for superimposing and displaying on the forward image a parking target indicatory (X) for showing the target parking position, wherein the parking target indicator (X) has a relative positional relationship determined in advance with respect to a position of the vehicle on a road surface and is fixed and kept in a predetermined position on a display screen even when the vehicle moves,
a target parking position setting section having means for setting the target parking position by specifying the position of the parking target indicator (X) on the display (18), and
a forward travel guidance section having means for guiding forward travel of the vehicle to a parking start position (B), which is in a predetermined relative positional relationship with the target parking position and in which the reverse travel of the vehicle is to be started toward the target parking position, after the target parking position has been set using the target parking position setting section.

2. The parking assistance device according to claim 1, **characterized in that** the forward travel guidance section has a target indicator display section for displaying the forward image on the display as well as superimposing and displaying on the forward image a target indicator (Y₁, Y₂) for showing the parking start position (B) or the guidance position through which passage will occur in the process of arriving at the parking start position (B).

3. The parking assistance device according to claim 2, **characterized in that** the target indicator display section displays on the display a vehicle indicator (Z₁, Z₂) for showing that the vehicle has moved to the parking start position (B) or to the guidance position when the positional relationship with the target indicator on the display corresponds to a predetermined positional relationship.

## Patentansprüche

1. Parkunterstützungsvorrichtung (10) zum Führen einer Rückwärtsfahrt eines Fahrzeugs zu einer Zielparkposition, in der das Einparken stattfinden soll, **gekennzeichnet durch**:
einen Parkzielindikatoranzeigeabschnitt mit einer Einrichtung zum Anzeigen eines nach vorne gerichteten Bildes, in dem der Zustand vor dem Fahrzeug als ein Bild auf einer Anzeige (18), die **durch** einen Fahrzeugfahrer betrachtet werden kann, vor einer Rückwärtsfahrtführung zu der Zielparkposition dargestellt wird, und zum Überlagern und Anzeigen eines Parkzielindikators (X) auf dem nach vorne gerichteten Bild zum Zeigen der Zielparkposition, wobei der Parkzielindikator (X) eine im Voraus bestimmte relative positionelle Beziehung mit Bezug auf eine Position des Fahrzeugs auf einer Straßenoberfläche aufweist und fest ist und in einer vorbestimmten Position auf einem Anzeigebildschirm beibehalten wird, auch wenn sich das Fahrzeug bewegt,
einen Zielparkpositionseinstellabschnitt mit einer Einrichtung zum Einstellen der Zielparkposition **durch** Spezifizieren der Position des Parkzielindikators (X) auf der Anzeige (18), und
einen Vorwärtsfahrtführungsabschnitt mit einer Einrichtung zum Führen einer Vorwärtsfahrt des Fahrzeugs zu einer Parkstartposition (B), die sich in einer vorbestimmten relativen positionellen Beziehung mit der Zielparkposition befindet und an der die Rückwärtsfahrt des Fahrzeugs zu der Zielparkposition zu starten ist, nachdem die Zielparkposition unter Verwendung des Zielparkpositionseinstellabschnitts eingestellt wurde.

2. Parkunterstützungsvorrichtung gemäß Anspruch 1, **dadurch gekennzeichnet, dass** der Vorwärtsfahrtführungsabschnitt einen Zielindikatoranzeigeabschnitt aufweist, zum Anzeigen des nach vorne gerichteten Bildes auf der Anzeige sowie zum Überlagern und Anzeigen eines Zielindikators (Y₁, Y₂) auf dem nach vorne gerichteten Bild zum Zeigen der Parkstartposition (B) oder der Führungsposition, die in dem Prozess des Erreichens der Parkstartposition (B) durchfahren wird.

3. Parkunterstützungsvorrichtung gemäß Anspruch 2, **dadurch gekennzeichnet, dass** der Zielindikatoranzeigeabschnitt auf der Anzeige einen Fahrzeugindikator (Z₁, Z₂) anzeigt, zum Zeigen, dass sich das Fahrzeug zu der Parkstartposition (B) oder zu der Führungsposition bewegt hat, wenn die positionelle Beziehung mit dem Zielindikator auf der Anzeige einer vorbestimmten positionellen Beziehung entspricht.

## Revendications

1. Dispositif d'aide au stationnement (10) destiné à guider un déplacement en marche arrière d'un véhicule vers une position de stationnement de cible dans laquelle le stationnement doit se produire, **caractérisé en ce qu'**il comporte :
une section d'affichage d'indicateur de cible de stationnement ayant des moyens destinés à afficher une image vers l'avant dans laquelle l'état vers l'avant du véhicule est présenté sous la forme d'une image sur un affichage (18) qui peut être vue par un conducteur de véhicule avant le guidage de déplacement en marche arrière vers la position de stationnement de cible, et destiné à superposer et afficher sur l'image vers l'avant un indicateur de cible de stationnement (X) afin de montrer la position de stationnement de cible, l'indicateur de cible de stationnement (X) ayant une relation de position relative déterminée à l'avance par rapport à une position du véhicule sur une surface de route et étant fixé et maintenu dans une position prédéterminée sur un écran d'affichage même lorsque le véhicule se déplace,
une section de détermination de position de stationnement de cible ayant des moyens destinés à déterminer la position de stationnement de cible en spécifiant la position de l'indicateur de cible de stationnement (X) sur l'affichage (18), et
une section de guidage de déplacement vers l'avant ayant des moyens destinés à guider le déplacement vers l'avant du véhicule vers une position de début de stationnement (B), qui est dans une relation de position relative prédéterminée avec la position de stationnement de cible et dans laquelle le déplacement en marche arrière du véhicule doit être commencé vers la position de stationnement de cible, une fois que la position de stationnement de cible a été déterminée en utilisant la section de détermination de position de stationnement de cible.

2. Dispositif d'aide au stationnement selon la revendication 1, **caractérisé en ce que** la section de guidage de déplacement vers l'avant a une section d'affichage d'indicateur de cible destinée à afficher l'image vers l'avant sur l'affichage ainsi que superposer et afficher un indicateur de cible (Y1, Y2) afin de montrer la position de début de stationnement (B) ou la position de guidage par lesquelles un passage se produit dans le processus d'arrivée à la position de début de stationnement (B).

3. Dispositif d'aide au stationnement selon la revendication 2, **caractérisé en ce que** la section d'affichage d'indicateur de cible affiche sur l'affichage un indicateur de véhicule (Z1, Z2) afin de montrer que le véhicule s'est déplacé vers la position de début de stationnement (B) ou vers la position de guidage quand la relation de position avec l'indicateur de cible sur l'affichage correspond à une relation de position prédéterminée.
